# EUROPÄISCHE PATENTSCHRIFT

(11) **EP 3 784 916 B1**
(45) Veröffentlichungstag und Bekanntmachung des Hinweises auf die Patenterteilung: **11.01.2023**
(21) Anmeldenummer: 19718611.7
(22) Anmeldetag: 09.04.2019
(51) Int. Cl.: F16C 35/07, B62D 7/18, B60B 27/00, B60B 35/18

(54) **RADTRÄGER FÜR EIN FAHRZEUG, INSBESONDERE FÜR EIN KRAFTFAHRZEUG, ANORDNUNG EINES RADLAGERS AN EINEM SOLCHEN RADTRÄGER SOWIE FAHRZEUG**
WHEEL SUPPORT FOR A VEHICLE, IN PARTICULAR FOR A MOTOR VEHICLE, ARRANGEMENT OF A WHEEL BEARING ON A WHEEL SUPPORT OF THIS TYPE, AND VEHICLE
SUPPORT DE ROUES POUR UN VÉHICULE, EN PARTICULIER POUR UN VÉHICULE AUTOMOBILE, AGENCEMENT D'UN PALIER DE ROUE AU NIVEAU D'UN TEL SUPPORT DE ROUES ET VÉHICULE

(30) Priorität: 27.04.2018 DE 102018206626
(43) Veröffentlichungstag der Anmeldung: 03.03.2021
(73) Patentinhaber: Audi AG, 85045 Ingolstadt (DE)
(72) Erfinder: ALBL, Johannes, 85055 Ingolstadt (DE); BOSCH, Jakob, 88339 Bad Waldsee (DE); FRISCH, Michael, 94513 Schönberg (DE)
(86) Internationale Anmeldenummer: PCT/EP2019/058939
(87) Internationale Veröffentlichungsnummer: WO 2019/206620

(56) Entgegenhaltungen:
- WO-A1-2016/030592
- DE-A1-102008 030 045
- DE-A1-102015 220 774

## Beschreibung

Die Erfindung betrifft einen Radträger für ein Fahrzeug, insbesondere für ein Kraftfahrzeug, gemäß dem Oberbegriff von Patentanspruch 1. Ferner betrifft die Erfindung eine Anordnung eines Radlagers an einem solchen Radträger für ein Fahrzeug, insbesondere für ein Kraftfahrzeug, gemäß dem Oberbegriff von Patentanspruch 11. Des Weiteren betrifft die Erfindung ein Fahrzeug, insbesondere ein Kraftfahrzeug.

Derartige Radträger für Fahrzeuge, insbesondere für Kraftfahrzeuge, sowie derartige Anordnungen von Radlagern an Radträgern für Fahrzeuge, insbesondere für Kraftfahrzeuge, sind aus dem allgemeinen Stand der Technik und insbesondere aus dem Serienfahrzeugbau bereits hinlänglich bekannt. Der Radträger weist dabei wenigstens eine Aufnahmeöffnung auf, in welcher ein Radlager zumindest teilweise aufnehmbar ist. Über das Radlager sind wenigstens eine Radnabe und somit wenigstens ein Rad des Fahrzeugs drehbar an dem Radträger zu lagern. Bei der jeweiligen Anordnung ist das Radlager zumindest teilweise in der Aufnahmeöffnung aufgenommen. In vollständig hergestelltem Zustand des Fahrzeugs können sich beispielsweise die Radnabe und somit das Rad um eine Drehachse relativ zu dem Radträger drehen.

Des Weiteren weist der Radträger einen in der Aufnahmeöffnung angeordnet Zentriersitz auf, über welchen das Radlager in radialer Richtung des Radlagers und somit der Aufnahmeöffnung an dem Radträger abstützbar beziehungsweise abgestützt ist. Des Weiteren ist das Radlager über den Zentriersitz beziehungsweise mittels des Zentriersitzes relativ zu dem Radträger zentrierbar beziehungsweise zentriert.

Außerdem offenbart die WO 2016/030592 A1 einen Nabenträger für ein Fahrzeugrad. Der Nabenträger weist eine Platte auf, in welcher eine Durchgangsöffnung für ein Nabenlager ausgebildet ist. Außerdem sind Durchgangsbohrungen für Schrauben vorgesehen, mittels welchen der Nabenträger an einer Nabe befestigbar ist.

Aufgabe der vorliegenden Erfindung ist es, einen Radträger, eine Anordnung und ein Fahrzeug der eingangs genannten Art derart weiterzuentwickeln, dass das Radlager besonders einfach an dem Radträger montiert und von dem Radträger demontiert werden kann, wobei gleichzeitig das Gewicht des Radträgers besonders gering gehalten werden kann.

Diese Aufgabe wird erfindungsgemäß durch einen Radträger mit den Merkmalen des Patentanspruchs 1, durch eine Anordnung mit den Merkmalen des Patentanspruchs 11 sowie durch ein Fahrzeug mit den Merkmalen des Patentanspruchs 12 gelöst. Vorteilhafte Ausgestaltungen mit zweckmäßigen Weiterbildungen der Erfindung sind in den übrigen Ansprüchen angegeben.

Ein erster Aspekt der Erfindung betrifft einen Radträger für ein Fahrzeug, insbesondere für ein Kraftfahrzeug. Das Kraftfahrzeug ist beispielsweise als Kraftwagen, insbesondere als Personenkraftwagen, ausgebildet. Der Radträger weist wenigstens eine Aufnahmeöffnung auf, welche beispielsweise als Durchgangsöffnung ausgebildet ist. In der Aufnahmeöffnung ist ein Radlager zumindest teilweise, insbesondere zumindest überwiegend oder vollständig, aufnehmbar. Hierunter ist insbesondere zu verstehen, dass das Radlager entlang seiner axialen Richtung zumindest teilweise, insbesondere zumindest überwiegend oder vollständig, in der Aufnahmeöffnung aufnehmbar ist. Über das Radlager ist wenigstens eine Radnabe des Fahrzeugs drehbar an dem Radträger zu lagern. Da beispielsweise über die Radnabe wenigstens ein Rad des Fahrzeugs drehbar an dem Radlager zu lagern ist, können über das Radlager die Radnabe und somit das Rad drehbar an dem Radträger gelagert werden. In vollständig hergestellten Zustand des Fahrzeugs sind die Radnabe und über diese das Rad drehbar an dem Radträger über das Radlager gelagert, sodass die Radnabe beziehungsweise das Rad um eine Drehachse relativ zu dem Radträger drehbar ist. Die Drehachse fällt dabei mit der axialen Richtung des Radlagers und somit beispielsweise der Aufnahmeöffnung zusammen, wobei beispielsweise die Drehachse mit der Mittelachse der Aufnahmeöffnung zusammenfällt.

Der Radträger weist ferner einen in der Aufnahmeöffnung angeordneten Zentriersitz auf, über welchen das Radlager in radialer Richtung des Radlagers beziehungsweise der Aufnahmeöffnung an dem Radträger abstützbar beziehungsweise abgestützt ist. Des Weiteren ist das Radlager über den Zentriersitz beziehungsweise mittels des Zentriersitzes relativ zu dem Radträger zentrierbar beziehungsweise zentriert.

Um nun das Radlager auf besonders einfache, das heißt mit nur geringen Kräften an dem Radträger montieren und von dem Radträger demontieren zu können, wobei gleichzeitig das Gewicht des Radträgers in einem besonders geringen Rahmen gehalten werden kann, ist es erfindungsgemäß vorgesehen, dass der Zentriersitz mehrere, in Umfangsrichtung der Aufnahmeöffnung aufeinanderfolgende und voneinander beabstandete Zentrierflächensegmente aufweist, zwischen welchen jeweilige Ausnehmungen des Radträgers angeordnet sind. Das Radlager ist somit entlang seiner radialen Richtung nach außen an den Zentrierflächensegmenten abstützbar beziehungsweise abgestützt und somit über die Zentrierflächensegmente beziehungsweise mittels der Zentrierflächensegmente relativ zu dem Radträger zentrierbar beziehungsweise zentriert, sodass die Zentrierflächensegmente den Zentriersitz bilden beziehungsweise zu dem Zentriersitz gehören. Die auch als Aussparungen oder Wegnahmen bezeichneten Ausnehmungen jedoch gehören nicht zum Zentriersitz. Mit anderen Worten sind die Ausnehmungen keine Bestandteile des Zentriersitzes, da das Radlager im Bereich der Ausnehmungen in radialer Richtung nicht an dem Radträger abgestützt ist.

Die Ausnehmungen sind in radialer Richtung nach außen durch jeweilige Wandungsbereiche oder Flächensegmente des Radträgers begrenzt, wobei diese Wandungsbereiche beziehungsweise Flächensegmente in radialer Richtung nach außen hin gegenüber den Zentrierflächensegmenten zurück versetzt sind. Dies bedeutet, dass zumindest ein in axialer Richtung des Radlagers verlaufender Längenbereich der Aufnahmeöffnung in Umfangsrichtung der Aufnahmeöffnung vollständig umlaufend durch einen innenumfangsseitige Mantelfläche des Radträgers begrenzt ist, wobei die Umfangsrichtung der Aufnahmeöffnung um die zuvor genannte Drehachse umläuft. Die innenumfangsseitige Mantelfläche umfasst dabei beispielsweise die Zentrierflächensegmente und die dazwischen angeordneten Flächensegmente, die in radialer Richtung nach außen gegenüber den Zentrierflächensegmenten zurück versetzt sind. Die Ausnehmungen sind somit beispielsweise jeweilige Taschen, welche sich in radialer Richtung nach außen von der Aufnahmeöffnung beziehungsweise von den Zentrierflächensegmenten weg erstrecken. Dabei sind beispielsweise die Zentrierflächensegmente auf demselben, den Zentrierflächensegmenten gemeinsamen Durchmesser, insbesondere Innendurchmesser, angeordnet. Hierdurch kann das Radlager besonders präzise an dem Radträger abgestützt und relativ zu diesem zentriert werden. Die Ausnehmungen sind dabei Ausnehmungen der zuvor beschriebenen innenumfangsseitigen Mantelfläche, sodass die Zentrierflächensegmente in Umfangsrichtung über die Ausnehmungen voneinander beabstandet sind. Darunter ist insbesondere zu verstehen, dass zwischen jeweils zwei in Umfangsrichtung der Aufnahmeöffnung unmittelbar benachbarten der Zentrierflächensegmenten genau oder wenigstens eine der Ausnehmungen angeordnet ist. Somit sind beispielsweise in Umfangsrichtung der Aufnahmeöffnung die Zentrierflächensegmente und die Ausnehmungen abwechselnd aufeinanderfolgend angeordnet.

Da die Zentrierflächensegmente in Umfangsrichtung der Aufnahmeöffnung aufeinanderfolgend angeordnet und dabei über die Ausnehmung voneinander beabstandet sind, ist keine in Umfangsrichtung der Aufnahmeöffnung vollständig durchgehende Zentrierfläche vorgesehen, sondern erfindungsgemäß ist der Zentriersitz in Umfangsrichtung der Aufnahmeöffnung segmentiert. Dies bedeutet, dass erfindungsgemäß eine Segmentierung des Zentriersitzes vorgesehen ist. Diese Segmentierung ermöglicht auch eine leichte und beschädigungsfreie Demontage des Radlagers von dem Radträger nach langem Witterungseinfluss. Der Erfindung liegt dabei die Erkenntnis zugrunde, dass sich üblicherweise in dem Zentriersitz durch Witterungseinflüsse Schmutz zwischen dem Radlager und dem Radträger ansammelt. Der Schmutz kann zu einem Festbacken des Radlagers an dem Radträger führen. Dadurch steigen die Montagekräfte, die Erforderlich sind, um das Radlager von dem Radträger zu demontieren, stark an, was bei einer Demontage des Radlagers von dem Radträger zu Beschädigungen des Radträgers und/oder des Radlagers führen kann. Durch die Segmentierung des Zentriersitzes kann zum einen eine Fläche, entlang welcher das Radlager den Radträger direkt berührt beziehungsweise umgekehrt, besonders gering gehalten werden, sodass die zur Demontage des Radlagers von dem Radträger erforderlichen Demontagekräfte besonders gering gehalten werden können. Darüber hinaus kann im Bereich des Zentriersitzes im Vergleich zu herkömmlichen Radträgern mehr Platz geschaffen werden, was dazu führt, dass der Schmutzeintrag in die tatsächliche Zentrierfläche reduziert wird. Außerdem kann durch die Tasche ein besonders großer Raum vor einer Radlagerdichtung geschaffen werden, der die Schmutzbeaufschlagung der Radlagerdichtung besonders gering halten kann.

Der Radträger kann ein Schwenklager sein oder auch als Schwenklager bezeichnet werden, da der Radträger beispielsweise im vollständig hergestellten Zustand des Fahrzeugs verschwenkbar an einem beispielsweise als selbsttragende Karosserie ausgebildeten Aufbau des Fahrzeugs gehalten und somit beispielsweise, insbesondere um wenigstens eine Schwenkachse, relativ zu dem Aufbau verschwenkbar ist. Dadurch kann beispielsweise das über den Radträger zumindest mittelbar an dem Aufbau zu lagernde Rad relativ zu dem Aufbau verschwenkt und somit gelenkt werden, sodass die Schwenkachse beispielsweise eine Lenkachse ist, um welche das Rad relativ zu dem Aufbau verschwenkt und somit gelenkt werden kann. Durch Verschwenken beziehungsweise Lenken des Rads relativ zu dem Aufbau können Spurwechsel beziehungsweise Richtungsänderungen und Kurvenfahrten des Fahrzeugs bewirkt werden. Hierzu ist beispielsweise der Radträger und/oder das Rad zumindest mittelbar mit einer insbesondere als Lenkrad ausgebildeten Lenkhandhabe des Fahrzeugs gekoppelt. Die Lenkhandhabe ist im Innenraum des Fahrzeugs angeordnet und kann relativ zu dem Aufbau bewegt, insbesondere gedreht, werden, um dadurch das Rad und den Radträger relativ zu dem Aufbau zu verschwenken.

Die Ausnehmungen sind in axialer Richtung der Aufnahmeöffnung durch den Radträger begrenzt.

In vorteilhafter Ausgestaltung der Erfindung sind die Zentrierflächensegmente in Umfangsrichtung der Aufnahmeöffnung gleichmäßig verteilt angeordnet, wodurch das Radlager und somit die Radnabe besonders präzise relativ zu dem Radträger zentriert werden können. Außerdem können lokale, übermäßige Belastungen vermieden werden.

Um das Gewicht des Radträgers besonders gering halten sowie das Radlager besonders einfach montieren und demontieren zu können, ist es in weiterer Ausgestaltung der Erfindung vorgesehen, dass die Ausnehmungen in Umfangsrichtung der Aufnahmeöffnung gleichmäßig verteilt angeordnet sind.

Eine weitere Ausführungsform zeichnet sich dadurch aus, dass zumindest die Zentrierflächensegmente und die Ausnehmungen durch einen einstückigen Körper des Radträgers gebildet sind. Dadurch kann das Gewicht des Radträgers in einem besonders geringen Rahmen gehalten werden.

In weiterer Ausgestaltung der Erfindung sind die Ausnehmungen durch Urformen hergestellt, wodurch der Radträger besonders kosten- und gewichtsgünstig hergestellt werden kann.

Dabei hat es sich als besonders vorteilhaft gezeigt, wenn der Radträger durch das Urformen hergestellt ist. hierdurch kann der Radträger besonders kostengünstig hergestellt werden.

Insbesondere ist es denkbar, dass die Ausnehmungen ausschließlich durch das Urformen hergestellt sind.

In weiterer Ausgestaltung der Erfindung sind die Ausnehmungen durch Schmieden und/oder Pressen und/oder Gießen hergestellt, wodurch die Kosten besonders gering gehalten werden können.

Bei einer besonders vorteilhaften Ausführungsform der Erfindung sind die Ausnehmungen, insbesondere ausschließlich oder zusätzlich, durch mechanisches Bearbeiten, insbesondere durch spanendes Bearbeiten wie beispielsweise Fräsen, hergestellt. Dadurch können die Ausnehmungen besonders präzise hergestellt werden. Insbesondere können dadurch die Ausnehmungen durch Materialwegnahme hergestellt werden, wodurch das Gewicht des Radträgers in einem besonders geringen Rahmen gehalten werden kann.

Mit anderen Worten ist es möglich, dass die auch als Aussparungen bezeichneten Ausnehmungen schon in einem Rohling des Radträgers vorhanden sein können, wobei der Radträger aus dem auch als Radträgerrohling oder Schwenklagerrohling bezeichneten Rohling hergestellt wird. Ferner ist es denkbar, dass die Ausnehmungen zusammen mit einer maschinellen Bearbeitung der Aufnahmeöffnung in den Rohling eingebracht werden. Ferner ist denkbar, dass die Aufnahmeöffnung durch maschinelles Bearbeiten, insbesondere durch spanendes Bearbeiten, bearbeitet beziehungsweise hergestellt wird, wobei die Ausnehmungen durch dieses maschinelle, insbesondere spanende, Bearbeiten hergestellt werden. Bevorzugt werden die Ausnehmungen bereits im auch als Rohteil bezeichneten Rohling vorgehalten, was zu einer besonders kostengünstigen Lösung führt.

Als besonders vorteilhaft hat es sich gezeigt, wenn die Ausnehmungen axial, das heißt in axialer Richtung des Radlagers und somit der Aufnahmeöffnung, konisch ausgebildet sind, um beispielsweise eine einfache Entformung gewährleisten zu können. Unter dem Merkmal, dass die Ausnehmung beispielsweise konisch ausgebildet ist, ist insbesondere zu verstehen, dass sich die jeweilige Ausnehmung in axialer Richtung, insbesondere von dem Rad weg, verjüngt, insbesondere konisch verjüngt, wodurch der Radträger besonders einfach und kostengünstig hergestellt werden kann.

Um das Radlager besonders präzise sowie auf kostengünstige Weise relativ zu dem Radträger positionieren und somit zentrieren zu können, ist es in weiterer Ausgestaltung der Erfindung vorgesehen, dass die Zentrierflächensegmente mechanisch bearbeitet sind. Insbesondere sind die Zentrierflächensegmente durch das mechanische beziehungsweise maschinelle Bearbeiten mechanisch beziehungsweise maschinell bearbeitet, durch das auch die Ausnehmungen hergestellt sind beziehungsweise umgekehrt.

Schließlich hat es sich als besonders vorteilhaft gezeigt, wenn die Zentrierflächensegmente einen Passsitz, insbesondere einen Spielpasssitz, bilden. Hierdurch kann das Radlager besonders einfach und präzise montiert und ausgerichtet werden.

Ein zweiter Aspekt der Erfindung betrifft eine Anordnung eines Radlagers an einem Radträger für ein Fahrzeug, insbesondere für ein Kraftfahrzeug wie beispielsweise einen als Personenkraftwagen ausgebildeten Kraftwagen. Bei der Anordnung ist das Radlager, über welches wenigstens eine Radnabe des Fahrzeugs drehbar an dem Radträger zu lagern beziehungsweise gelagert ist, zumindest teilweise in einer Aufnahmeöffnung des Radträger aufgenommen. Des Weiteren ist das Radlager bei der Anordnung über einen in der Aufnahmeöffnung des Radträgers angeordneten Zentriersitz in radialer Richtung des Radlagers an dem Radträger abgestützt. Außerdem ist bei der Anordnung das Radlager über den Zentriersitz beziehungsweise mittels des Zentriersitzes in radialer Richtung relativ zu dem Radträger zentriert und dadurch positioniert.

Um nun das Radlager auf besonders einfache Weise montieren und demontieren zu können, wobei gleichzeitig das Gewicht des Radträgers in einem besonders geringen Rahmen gehalten werden kann, ist es erfindungsgemäß vorgesehen, dass der Zentriersitz mehrere, in Umfangsrichtung der Aufnahmeöffnung aufeinanderfolgende und voneinander beabstandete Zentrierflächensegmente aufweist, zwischen welchen jeweilige Ausnehmungen des Radträgers angeordnet sind. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Bei der Anordnung sind die Ausnehmungen Frei- beziehungsweise Zwischenräume zwischen dem Radlager und dem Radträger, wobei die Ausnehmungen beispielsweise in radialer Richtung des Radlagers nach außen hin durch den Radträger und nach innen hin durch das Radlager begrenzt sind. In Umfangsrichtung der Aufnahmeöffnung sind die Ausnehmungen beispielsweise durch den Radträger beidseitig begrenzt. Dabei ist es vorzugsweise vorgesehen, dass die Zwischenräume leer beziehungsweise ausschließlich mit Luft gefüllt und somit beispielsweise als Lufträume ausgebildet sind.

Bei der Anordnung sind die Ausnehmungen in axialer Richtung der Aufnahmeöffnung durch den Radträger begrenzt.

Ein dritter Aspekt der Erfindung betrifft ein vorzugsweise als Kraftfahrzeug und dabei vorzugsweise als Kraftwagen, insbesondere als Personenkraftwagen, ausgebildetes Fahrzeug, welches einen erfindungsgemäßen Radträger und/oder wenigstens eine erfindungsgemäße Anordnung aufweist. Vorteile und vorteilhafte Ausgestaltungen des ersten Aspekts der Erfindung und des zweiten Aspekts der Erfindung sind als Vorteile und vorteilhafte Ausgestaltungen des dritten Aspekts der Erfindung anzusehen und umgekehrt.

Die Erfindung umfasst auch die Kombinationen der Merkmale der beschriebenen Ausführungsformen.

Zu der Erfindung gehören auch Weiterbildungen der erfindungsgemäßen Anordnung und des erfindungsgemäßen Fahrzeugs, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Anordnung und des erfindungsgemäßen Fahrzeugs hier nicht noch einmal beschrieben.

Im Folgenden sind Ausführungsbeispiele der Erfindung beschrieben. Hierzu zeigt:
- Fig. 1: eine schematische Perspektivansicht eines erfindungsgemäßen Radträgers für ein Fahrzeug gemäß einer ersten Ausführungsform;
- Fig. 2: ausschnittsweise eine schematische Perspektivansicht des Radträgers gemäß der ersten Ausführungsform;
- Fig. 3: ausschnittsweise eine schematische Schnittansicht des Radträgers gemäß der ersten Ausführungsform;
- Fig. 4: ausschnittsweise eine weitere schematische Perspektivansicht des Radträgers gemäß der ersten Ausführungsform;
- Fig. 5: eine schematische Perspektivansicht des Radträgers gemäß einer nicht zur Erfindung gehörenden Ausführungsform;
- Fig. 6: ausschnittsweise eine schematische Perspektivansicht des Radträgers gemäß der nicht zur Erfindung gehörenden Ausführungsform; und
- Fig. 7: ausschnittsweise eine schematische Schnittansicht des Radträgers gemäß der nicht zur Erfindung gehörenden Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

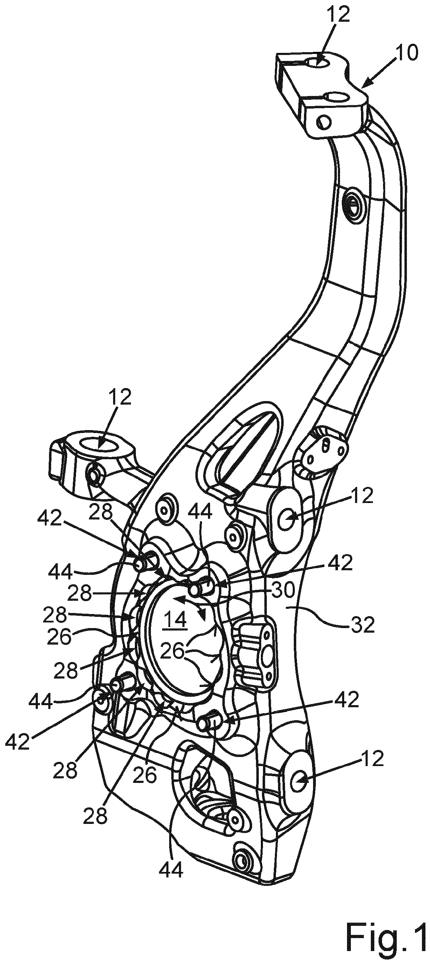

Fig. 1 zeigt in einer schematischen Perspektivansicht einen Radträger 10 gemäß einer ersten Ausführungsform für ein Fahrzeug, insbesondere für ein Kraftfahrzeug. Das Kraftfahrzeug ist vorzugsweise als Kraftwagen, insbesondere als Personenkraftwagen, ausgebildet und umfasst in seinem vollständig hergestellten Zustand den Radträger 10. Der Radträger 10 ist beispielsweise verschwenkbar an einem beispielsweise als selbsttragende Karosserie ausgebildeten Aufbau des Kraftfahrzeugs gehalten beziehungsweise gelagert, sodass der Radträger 10 im vollständig hergestellten Zustand des Fahrzeugs relativ zu dem Aufbau wenigstens oder genau einer Schwenkachse verschwenkt werden kann. Der Radträger 10 weist beispielsweise Anbindungsstellen 12 auf, an welchen der Radträger 10, insbesondere gelenkig, mit wenigstens einem jeweiligen Radlenker verbunden oder verbindbar ist. Über die Radlenker kann der Radträger 10 gelenkig zumindest mittelbar mit dem Aufbau gekoppelt sein. Insbesondere lassen die Radträger beispielsweise Ein- und Ausfederbewegungen der Radträgers 10 und somit wenigstens eines Rades des Kraftfahrzeugs zu, wobei das Rad über den Radträger 10 zumindest mittelbar an den Aufbau angebunden ist. Ferner lassen beispielsweise die Radlenker das Verschwenken des Radträgers 10 relativ zu dem Aufbau zu.

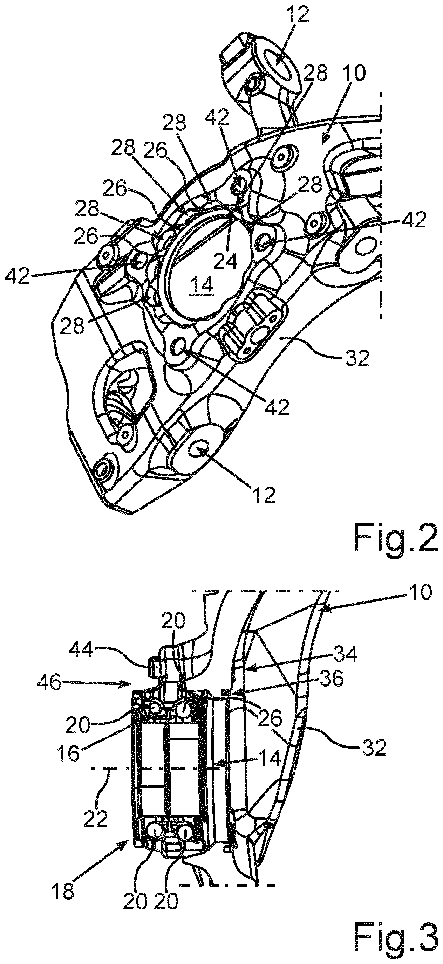

Der Radträger 10 weist wenigstens eine vorliegend als Durchgangsöffnung ausgebildete Aufnahmeöffnung 14 auf, in welcher ein aus Fig. 3 erkennbares Radlager 16 zumindest teilweise aufnehmbar beziehungsweise aufgenommen ist. Fig. 3 zeigt ausschnittsweise in einer schematischen Schnittansicht den Radträger 10 und eine Anordnung 18 des Radlagers 16 an dem Radträger 10. Bei der Anordnung 18 ist zumindest ein Längenbereich des Radlagers 16 in axialer Richtung des Radlagers 16 und somit der Aufnahmeöffnung 14 in der Aufnahmeöffnung 14 und somit in dem Radträger 10 aufgenommen. Das Radlager 16 ist dabei als Wälzlager ausgebildet, welches Wälzkörper vorliegend in Form von Kugeln 20 aufweist. Über das Radlager 16 ist das zuvor genannte Rad drehbar an dem Radträger 10 zu lagern oder gelagert, sodass sich beispielsweise das Rad um eine mit der axialen Richtung des Radlagers 16 zusammenfallende Drehachse 22 relativ zu dem Radträger 10 drehen kann. Insbesondere kann über das Radlager 16 eine Radnabe drehbar an dem Radträger 10 gelagert werden, sodass im vollständig hergestellten Zustand des Fahrzeugs die Radnabe über das Radlager 16 an dem Radträger 10 um die Drehachse 22 relativ zu dem Radträger 10 drehbar gelagert ist. Dabei kann das Rad drehfest mit der Radnabe verbindbar oder verbunden sein, sodass die Radnabe und somit das Rad über das Radlager 16 drehbar an dem Radträger 10 gelagert sein kann.

Besonders gut aus Fig. 1 ist erkennbar, dass der Radträger 10 einen in der Aufnahmeöffnung 14 angeordneten Zentriersitz 24 aufweist, über welchen das Radlager 16 in radialer Richtung des Radlagers 16 an dem Radträger 10 abstützbar beziehungsweise abgestützt ist. Des Weiteren ist das Radlager 16 über den Zentriersitz 24 beziehungsweise mittels des Zentriersitzes relativ zu dem Radträger 10 zentrierbar beziehungsweise zentriert. Hierzu ist das Radlager 16 in radialer Richtung nach außen hin, direkt an dem Zentriersitz 24 abgestützt.

Um nun das Radlager 16 besonders einfach an dem Radträger 10 montieren sowie von dem Radträger 10 demontieren zu können, wobei gleichzeitig das Gewicht des Radträgers 10 in einem besonders geringen Rahmen gehalten werden kann, weist der Zentriersitz 24 in um die Drehachse 22 verlaufender Umfangsrichtung der Aufnahmeöffnung 14 aufeinanderfolgende und in Umfangsrichtung voneinander beabstandete Zentrierflächensegmente 26 auf, zwischen welchen jeweilige Ausnehmungen 28 des Radträgers 10 angeordnet sind. Somit sind die Zentrierflächensegmente 26 in Umfangsrichtung der Aufnahmeöffnung 14 über die Ausnehmungen 28 voneinander beabstandet. Dabei ist in Fig. 1 die Umfangsrichtung der Aufnahmeöffnung 14 durch einen Doppelpfeil 30 veranschaulicht. Während die Drehachse 22 mit der axialen Richtung des Radlagers 16 und somit der Aufnahmeöffnung 14 zusammenfällt, verläuft die radiale Richtung des Radlagers 16 und somit der Aufnahmeöffnung 14 senkrecht zur Axialrichtung. Die Umfangsrichtung verläuft um die axiale Richtung.

Aus Fig. 1 bis 3 ist besonders gut erkennbar, dass die Zentrierflächensegmente 26 in Umfangsrichtung der Aufnahmeöffnung 14 gleichmäßig verteilt angeordnet sind. Ebenso sind die Ausnehmungen 28 in Umfangsrichtung der Aufnahmeöffnung 14 gleichmäßig verteilt angeordnet. Außerdem sind zumindest die Zentrierflächensegmente 26 und die Ausnehmungen 28 durch einen einstückigen Körper 32 des Radträgers 10 gebildet. Der Körper 32 wird beispielsweise durch Urformen, insbesondere durch Gießen und/oder Schmieden und/oder Pressen, gebildet. Dabei ist es denkbar, dass die Ausnehmungen 28, insbesondere ausschließlich, durch das Urformen hergestellt sind. Ferner ist es denkbar, dass die Ausnehmungen 28, insbesondere ausschließlich, durch maschinelles beziehungsweise mechanisches Bearbeiten hergestellt sind. insbesondere können die Ausnehmungen 28 sowohl durch das Urformen als auch durch maschinelles beziehungsweise mechanisches Bearbeiten hergestellt sein. Dabei ist es beispielsweise denkbar, dass der Radträger 10 aus einem Rohling hergestellt wird, welcher beispielsweise durch das zuvor genannte Urformen hergestellt ist beziehungsweise wird. Dabei weist beispielsweise schon der Rohling die Ausnehmungen 28 oder Rohlinge oder Rohformen der Ausnehmungen 28 auf. Die Rohlinge beziehungsweise Rohformen der Ausnehmung 28 werden beispielsweise durch maschinelles beziehungsweise mechanisches Bearbeiten bearbeitet und somit zu den Ausnehmungen 28 weitergebildet, sodass die Ausnehmungen 28 in ihrem fertig hergestellten Zustand sowohl durch das Urformen als auch durch maschinelles beziehungsweise mechanisches Bearbeiten hergestellt sind.

Vorzugsweise sind die Zentrierflächensegmente 26 durch maschinelles beziehungsweise mechanisches Bearbeiten bearbeitet. Dabei ist es denkbar, dass die Ausnehmungen 28 durch das maschinelle Bearbeiten hergestellt sind, durch welches die Zentrierflächensegmente 26 maschinell bearbeitet sind.

Bei der in Fig. 1 bis 3 gezeigten ersten Ausführungsform sind die als Materialausnehmungen oder Materialwegnahmen ausgebildeten Ausnehmungen 28 nur im Bereich des Zentriersitzes 24 selbst angeordnet. Dies bedeutet, dass die Ausnehmungen 28 in axialer Richtung nicht durchgehend ausgebildet sind, sondern die Ausnehmungen 28 sind in axialer Richtung des Radlagers 16 und somit der als Durchgangsöffnung ausgebildeten Aufnahmeöffnung 14 durch den Radträger 10, das heißt durch jeweilige Wandungsbereiche des Radträgers 10, begrenzt. Hierdurch kann mittels des Radträgers 10 ein besonders vorteilhaftes Vordichtlabyrinth gebildet werden, welches sich beispielsweise in axialer Richtung an die Aufnahmeöffnung 14 anschließt. Hierzu weist der Radträger 10, insbesondere auf einer dem Radlager 16 abgewandten Rückseite 34, einen hakenförmigen Fortsatz 36 auf, mittels welchem zumindest ein Teil des Vordichtlabyrinths gebildet ist beziehungsweise gebildet werden kann. Mit anderen Worten kann das Vordichtlabyrinth durch den hakenförmigen Fortsatz 36 des Radträgers 10 ausgebildet sein, was insbesondere dann vorteilhaft realisiert werden kann, wenn die Ausnehmungen 28 axial nicht durchgängig sondern in axialer Richtung durch den Radträger 10 begrenzt sind.

Im vollständig hergestellten Zustand des Fahrzeugs greift beispielsweise der Fortsatz 36 in eine entsprechende, zumindest im Wesentlichen C-förmige Vordichtung einer Gelenkwelle ein, wodurch das Vordichtlabyrinth gebildet ist. Hierdurch kann das Radlager 16 zusätzlich vor einem übermäßigen Schmutzeintrag geschützt werden.

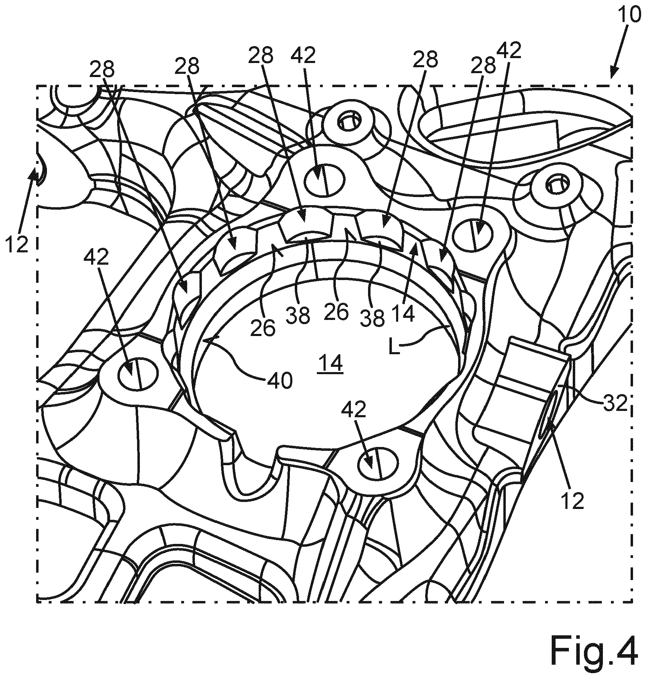

Fig. 4 zeigt den Radträger 10 gemäß der ersten Ausführungsform ausschnittsweise in einer schematischen Perspektivansicht. Besonders gut aus Fig. 4 sind die über die Ausnehmungen 28 in Umfangsrichtung voneinander beabstandeten Zentrierflächensegmente 26 erkennbar. Ferner sind in Fig. 4 besonders gut die in Fig. 4 mit 38 bezeichneten Wandungsbereiche des Radträgers 10 erkennbar, wobei durch die Wandungsbereiche 38 die Ausnehmungen 28 in axialer Richtung begrenzt sind. In axialer Richtung schließt sich an die Zentrierflächensegmente 26 beziehungsweise an die Ausnehmungen 28 ein Längenbereich L der Aufnahmeöffnung 14 an, wobei der der Längenbereich L in radialer Richtung nach außen hin durch eine im Längenbereich L in Umfangsrichtung der Aufnahmeöffnung 14 vollständig und somit unterbrechungsfrei umlaufende, innenumfangsseitige Mantelfläche 40 des Radträgers 10 begrenzt beziehungsweise gebildet ist.

In radialer Richtung nach außen hin schließen sich beispielsweise an die Aufnahmeöffnung 14 Befestigungselemente 42 an, mittels welchen das Radlager 16 zumindest entlang seiner axialen Richtung an dem Radträger 10 befestigt werden kann. Das jeweilige Befestigungselement 42 umfasst beispielsweise eine insbesondere als Schrauböffnung ausgebildete Öffnung. In die Öffnung kann beispielsweise eine Schraube eingeschraubt werden, mittels welcher das Radlager 16 an dem Radträger 10 befestigt werden kann. Mit anderen Worten kann in die Öffnung beispielsweise ein Schraubelement eingeschraubt werden, mittels welchem das Radlager 16 zumindest in seiner axialen Richtung an dem Radträger 10 befestigt werden kann. Aus Fig. 1 und 3 sind solche Schraubelemente erkennbar. Das jeweilige Schraubelement ist beispielsweise ein Schraubbolzen 44, welcher durch eine jeweilige korrespondierende Durchgangsöffnung des Radlagers 16 hindurchgesteckt werden kann.

Vorzugsweise bilden die Zentrierflächensegmente einen Passsitz, insbesondere einen Spielpasssitz. Dies bedeutet, dass das Radlager 16 mit einer Spielpassung in der Aufnahmeöffnung 14 angeordnet und dabei an dem Zentriersitz 24 abgestützt ist, sodass das Radlager 16 besonders einfach montiert und demontiert werden kann. Wieder mit anderen Worten ausgedrückt bildet die Aufnahmeöffnung 14, insbesondere der Zentriersitz 24 und somit die Zentrierflächensegmente 26, mit dem Radlager 16, insbesondere mit dessen Außenring, eine Spielpassung, über welche das Radlager 16, insbesondere über ihren Außenring, in radialer Richtung an dem Radträger 10 abgestützt und relativ zu dem Radträger 10 zentriert ist.

Auf einer dem Radträger 10 bei der Anordnung 18 abgewandten Seite 46 ragt der Schraubbolzen 44 aus der Aufnahmeöffnung heraus, sodass auf der Seite 46 ein weiteres Schraubelement insbesondere in Form einer Mutter auf den Schraubbolzen 44 aufgeschraubt werden kann. Hierdurch kann beispielsweise das Radlager 16 mittels der Mutter in axialer Richtung des Radlagers 16 gegen der Radträger 10 gespannt und dabei an dem Radträger 10 befestigt werden.

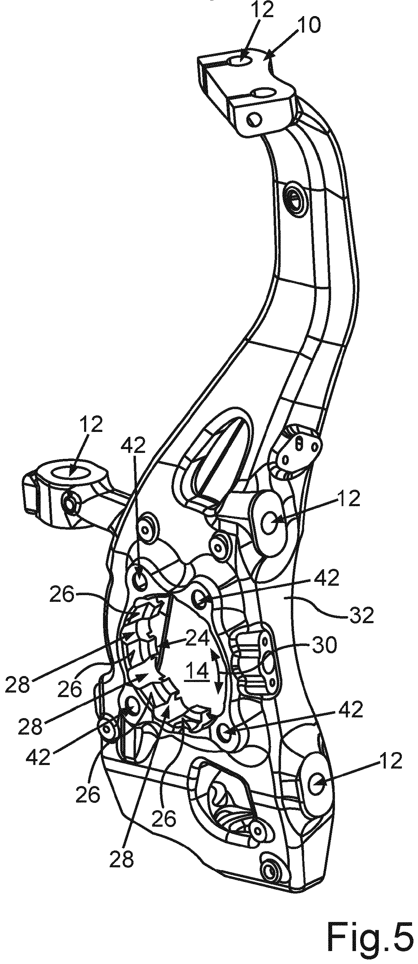

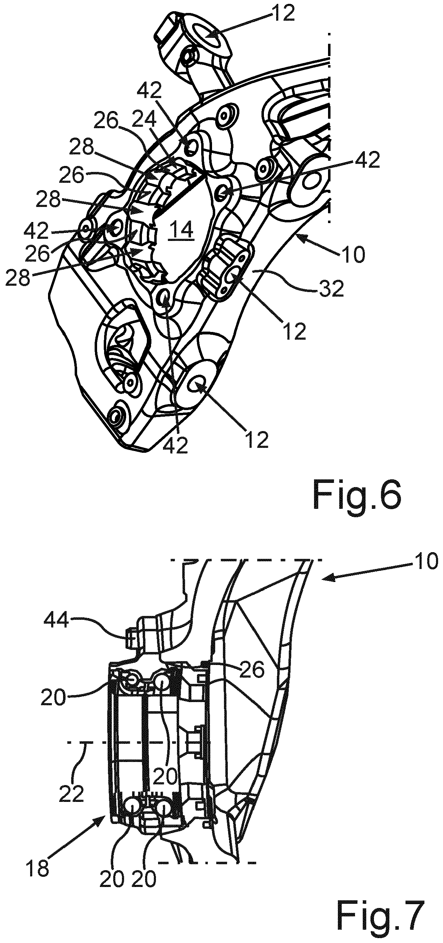

Fig. 5 bis. 7 zeigen eine nicht zur Erfindung gehörende Ausführungsform des Radträgers 10 und somit der Anordnung 18, welche in Fig. 7 gezeigt ist. Bei dieser Ausführungsform sind die Ausnehmungen 28 in axialer Richtung des Radlagers 16 und somit der Aufnahmeöffnung 14 grenzenlos. Dies bedeutet, dass die Ausnehmungen 28 in axialer Richtung durchgängig ausgebildet sind und sich dabei über die gesamte axiale Erstreckung der Aufnahmeöffnung 14 erstrecken. Dies ist insbesondere bei einer nicht angetriebenen Bauvariante vorteilhaft, in welcher beispielsweise keine Gelenkwelle vorgesehen ist, über welche die Radnabe beziehungsweise das Rad antreibbar ist. Eine solche Gelenkwelle, über welche die Radnabe beziehungsweise das Rad antreibbar ist, ist beispielsweise bei der ersten Ausführungsform vorgesehen, sodass die erste Ausführungsform beispielsweise bei einer angetriebenen Variante zum Einsatz kommen kann. Die in axialer Richtung durchgängige Ausgestaltung der jeweiligen Ausnehmung 28 beeinträchtigt hier nicht die Dichtheit des Radlagers 16, da dieses beispielsweise auf seiner Innenseite mit einem festsitzende Deckel selbst abgedichtet ist, sodass kein Vordichtlabyrinth erforderlich ist. Durch die in axialer Richtung durchgängige Ausgestaltung der Ausnehmungen 28 kann das Gewicht des Radträgers 10 in einem besonders geringen Rahmen gehalten werden.

## Patentansprüche

1. Radträger (10) für ein Fahrzeug, mit wenigstens einer Aufnahmeöffnung (14), in welcher ein Radlager (16), über welches wenigstens eine Radnabe des Fahrzeugs drehbar an dem Radträger (10) zu lagern ist, zumindest teilweise aufnehmbar ist, und mit einem in der Aufnahmeöffnung (14) angeordnet Zentriersitz (24), über welchen das Radlager (16) in radialer Richtung an dem Radträger (10) abstützbar und relativ zu dem Radträger (10) zentrierbar ist, wobei der Zentriersitz (24) mehrere, in Umfangsrichtung (30) der Aufnahmeöffnung (14) aufeinanderfolgende und voneinander beabstandete Zentrierflächensegmente (26) aufweist, zwischen welchen jeweilige Ausnehmungen (28) des Radträgers (10) angeordnet sind,
**dadurch gekennzeichnet, dass**
die Ausnehmungen (28) in axialer Richtung der Aufnahmeöffnung (14) durch den Radträger (10) begrenzt sind.

2. Radträger (10) nach Anspruch 1,
**dadurch gekennzeichnet, dass**
die Zentrierflächensegmente (26) in Umfangsrichtung (30) der Aufnahmeöffnung (14) gleichmäßig verteilt angeordnet sind.

3. Radträger (10) nach Anspruch 1 oder 2,
**dadurch gekennzeichnet, dass**
die Ausnehmungen (28) in Umfangsrichtung (30) der Aufnahmeöffnung (14) gleichmäßig verteilt angeordnet sind.

4. Radträger (10) nach einem der vorhergehenden Ansprüche,
**dadurch gekennzeichnet, dass**
zumindest die Zentrierflächensegmente (26) und die Ausnehmungen (28) durch einen einstückigen Körper (32) des Radträgers (10) gebildet sind.

5. Radträger (10) nach einem der vorhergehenden Ansprüche,
**dadurch gekennzeichnet, dass**
die Ausnehmungen (38) durch Urformen hergestellt sind.

6. Radträger (10) nach Anspruch 5,
**dadurch gekennzeichnet, dass**
der Radträger (10) durch das Urformen hergestellt ist.

7. Radträger (10) nach einem der vorhergehenden Ansprüche,
**dadurch gekennzeichnet, dass**
die Ausnehmungen (28) durch Schmieden und/oder Pressen und/oder Gießen hergestellt sind.

8. Radträger (10) nach einem der vorhergehenden Ansprüche,
**dadurch gekennzeichnet, dass**
die Ausnehmungen (28) durch mechanisches Bearbeiten hergestellt sind.

9. Radträger (10) nach einem der vorhergehenden Ansprüche,
**dadurch gekennzeichnet, dass**
die Zentrierflächensegmente (26) mechanisch bearbeitet sind.

10. Radträger (10) nach einem der vorhergehenden Ansprüche,
**dadurch gekennzeichnet, dass**
die Zentrierflächensegmente (26) einen Passsitz, insbesondere einen Spielpasssitz, bilden.

11. Anordnung (18) eines Radlagers (16) an einem Radträger (10) für ein Fahrzeug, wobei die Anordnung das Radlager (16) und den Radträger (10) umfasst, bei welcher das Radlager (16), über welches wenigstens eine Radnabe des Fahrzeugs drehbar an dem Radträger (10) zu lagern ist, zumindest teilweise in einer Aufnahmeöffnung (14) des Radträger (10) aufgenommen und über einen in der Aufnahmeöffnung (14) des Radträgers (10) angeordneten Zentriersitz (24) in radialer Richtung des Radlagers (16) an dem Radträger (10) abgestützt und relativ zu dem Radträger (10) zentriert ist, wobei der Zentriersitz (24) mehrere, in Umfangsrichtung (30) der Aufnahmeöffnung (14) aufeinanderfolgende und voneinander beabstandete Zentrierflächensegmente (26) aufweist, zwischen welchen jeweilige Ausnehmungen (28) des Radträgers (10) angeordnet sind,
**dadurch gekennzeichnet, dass**
die Ausnehmungen (28) in axialer Richtung der Aufnahmeöffnung (14) durch den Radträger (10) begrenzt sind.

12. Fahrzeug, mit wenigstens einem Radträger (10) nach einem der Ansprüche 1 bis 10 oder mit wenigstens einer Anordnung (18) nach Anspruch 11.

## Claims

1. Hub carrier (10) for a vehicle, comprising at least one receiving opening (14) in which a wheel bearing (16), via which at least one wheel hub of the vehicle is to be rotatably mounted on the hub carrier (10), can be at least partially received, and comprising a centring seat (24) arranged in the receiving opening (14), by means of which the wheel bearing (16) can be supported in the radial direction on the hub carrier (10) and centred relative to the hub carrier (10), the centring seat (24) having a plurality of centring surface segments (26) which follow one another in the circumferential direction (30) of the receiving opening (14) and are spaced apart from one another and between which respective recesses (28) of the hub carrier (10) are arranged,
**characterised in that**
the recesses (28) are bounded in the axial direction of the receiving opening (14) by the hub carrier (10).

2. Hub carrier (10) according to claim 1,
**characterised in that**
the centring surface segments (26) are uniformly distributed in the circumferential direction (30) of the receiving opening (14).

3. Hub carrier (10) according to claim 1 or claim 2,
**characterised in that**
the recesses (28) are uniformly distributed in the circumferential direction (30) of the receiving opening (14).

4. Hub carrier (10) according to any one of the preceding claims,
**characterised in that**
at least the centring surface segments (26) and the recesses (28) are formed by a one-piece body (32) of the hub carrier (10).

5. Hub carrier (10) according to any one of the preceding claims,
**characterised in that**
the recesses (38) are produced by primary forming.

6. Hub carrier (10) according to claim 5,
**characterised in that**
the hub carrier (10) is produced by the primary forming.

7. Hub carrier (10) according to any one of the preceding claims,
**characterised in that**
the recesses (28) are produced by forging and/or pressing and/or casting.

8. Hub carrier (10) according to any one of the preceding claims,
**characterised in that**
the recesses (28) are produced by mechanical machining.

9. Hub carrier (10) according to any one of the preceding claims,
**characterised in that**
the centring surface segments (26) are mechanically machined.

10. Hub carrier (10) according to any one of the preceding claims,
**characterised in that**
the centring surface segments (26) form a fit, in particular a clearance fit.

11. Arrangement (18) of a wheel bearing (16) on a hub carrier (10) for a vehicle, the arrangement comprising the wheel bearing (16) and the hub carrier (10), in which the wheel bearing (16), by means of which at least one wheel hub of the vehicle is to be rotatably mounted on the hub carrier (10), is at least partially received in a receiving opening (14) of the hub carrier (10) and is supported on the hub carrier (10) in the radial direction of the wheel bearing (16) via a centring seat (24) arranged in the receiving opening (14) of the hub carrier (10) and is centred relative to the hub carrier (10), the centring seat (24) having a plurality of centring surface segments (26) which follow one another in the circumferential direction (30) of the receiving opening (14) and are spaced apart from one another and between which respective recesses (28) of the hub carrier (10) are arranged,
**characterised in that**
the recesses (28) are bounded in the axial direction of the receiving opening (14) by the hub carrier (10).

12. Vehicle, comprising at least one hub carrier (10) according to any one of claims 1 to 10 or comprising at least one arrangement (18) according to claim 11.

## Revendications

1. Support de roue (10) pour un véhicule, avec au moins une ouverture de réception (14), dans laquelle un palier de roue (16), par le biais duquel au moins un moyeu de roue du véhicule est à loger de manière rotative au niveau du support de roue (10), peut être reçu au moins partiellement, et avec un siège de centrage (24) agencé dans l'ouverture de réception (14), par le biais duquel le palier de roue (16) peut être en appui dans le sens radial contre le support de roue (10) et centré par rapport au support de roue (10), dans lequel le siège de centrage (24) présente plusieurs segments de surface de centrage (26) espacés les uns des autres et se suivant les uns les autres dans le sens périphérique (30) de l'ouverture de réception (14), entre lesquels des évidements (28) respectifs du support de roue (10) sont agencés,
**caractérisé en ce que**
les évidements (28) sont délimités dans le sens axial de l'ouverture de réception (14) par le support de roue (10).

2. Support de roue (10) selon la revendication 1,
**caractérisé en ce que**
les segments de surface de centrage (26) sont agencés répartis uniformément dans le sens périphérique (30) de l'ouverture de réception (14).

3. Support de roue (10) selon la revendication 1 ou 2,
**caractérisé en ce que**
les évidements (28) sont agencés répartis uniformément dans le sens périphérique (30) de l'ouverture de réception (14).

4. Support de roue (10) selon l'une quelconque des revendications précédentes,
**caractérisé en ce que**
au moins les segments de surface de centrage (26) et les évidements (28) sont formés par un corps (32) d'un seul tenant du support de roue (10).

5. Support de roue (10) selon l'une quelconque des revendications précédentes,
**caractérisé en ce que**
les évidements (38) sont fabriqués par transformation primaire.

6. Support de roue (10) selon la revendication 5,
**caractérisé en ce que**
le support de roue (10) est fabriqué par transformation primaire.

7. Support de roue (10) selon l'une quelconque des revendications précédentes,
**caractérisé en ce que**
les évidements (28) sont fabriqués par forgeage et/ou pressage et/ou coulage.

8. Support de roue (10) selon l'une quelconque des revendications précédentes,
**caractérisé en ce que**
les évidements (28) sont fabriqués par usinage mécanique.

9. Support de roue (10) selon l'une quelconque des revendications précédentes,
**caractérisé en ce que**
les segments de surface de centrage (26) sont usinés mécaniquement.

10. Support de roue (10) selon l'une quelconque des revendications précédentes,
**caractérisé en ce que**
les segments de surface de centrage (26) forment un siège ajusté, en particulier un siège ajusté avec jeu.

11. Agencement (18) d'un palier de roue (16) au niveau d'un support de roue (10) pour un véhicule, dans lequel l'agencement comporte le palier de roue (16) et le support de roue (10), pour lequel le palier de roue (16), par le biais duquel au moins un moyeu de roue du véhicule est à loger de manière rotative au niveau du support de roue (10), est reçu au moins partiellement dans une ouverture de réception (14) du support de roue (10) et est en appui par le biais d'un siège de centrage (24) agencé dans l'ouverture de réception (14) du support de roue (10) dans le sens radial du palier de roue (16) au niveau du support de roue (10) et est centré par rapport au support de roue (10), dans lequel le siège de centrage (24) présente plusieurs segments de surface de centrage (26) espacés les uns des autres et se suivant les uns les autres dans le sens périphérique (30) de l'ouverture de réception (14), entre lesquels des évidements (28) respectifs du support de roue (10) sont agencés,
**caractérisé en ce que**
les évidements (28) sont délimités dans le sens axial de l'ouverture de réception (14) par le support de roue (10).

12. Véhicule, avec au moins un support de roue (10) selon l'une quelconque des revendications 1 à 10 ou avec au moins un agencement (18) selon la revendication 11.
